# EUROPEAN PATENT APPLICATION

(11) **EP 4 262 199 A1**
(43) Date of publication of application: **18.10.2023**
(21) Application number: 21906372.4
(22) Date of filing: 02.12.2021
(51) Int. Cl.: H04N 13/366, G02B 30/22, G09G 5/00, G09G 5/36, G09G 5/377, H04N 13/31, H04N 13/398

(54) **STEREOSCOPIC DISPLAY CONTROLLER**

(30) Priority: 14.12.2020 JP 2020207140
(71) Applicant: Kyocera Corporation, Kyoto-shi Kyoto 612-8501 (JP)
(72) Inventor: KUSAFUKA, Kaoru, Kyoto-shi, Kyoto 612-8501 (JP); SATOU, Akinori, Kyoto-shi, Kyoto 612-8501 (JP)
(74) Representative: TBK
(86) International application number: PCT/JP2021/044310
(87) International publication number: WO 2022/131009

(57) **Abstract**

A stereoscopic display controller includes a display device that displays a parallax image, an input unit that receives an input of a viewpoint position of a user, and a control unit that performs a composition process of merging a left image and a right image into a parallax image. The composition process includes a first composition process and a second composition process. The control unit outputs the parallax image to the display device, performs the first composition process based on frame intervals of the parallax image, and performs the second composition process in response to an input of the viewpoint position into the input unit.

## Description

### TECHNICAL FIELD

The present disclosure relates to a stereoscopic display controller.

### BACKGROUND OF INVENTION

A known technique is described in, for example, Patent Literature 1.

### CITATION LIST

### PATENT LITERATURE

Patent Literature 1: Japanese Unexamined Patent Application Publication No. 2019-15823

### SUMMARY

In an aspect of the present disclosure, a stereoscopic display controller includes a display device, an input unit, and a control unit. The display device displays a parallax image. The input unit receives an input of a viewpoint position of a user. The control unit performs a composition process of merging a left image and a right image into a parallax image. The composition process includes a first composition process and a second composition process. The control unit outputs the parallax image to the display device. The control unit performs the first composition process based on frame intervals of the parallax image. The control unit performs the second composition process in response to an input of the viewpoint position into the input unit.

### BRIEF DESCRIPTION OF THE DRAWINGS

The objects, features, and advantages of the present disclosure will become more apparent from the following detailed description and the drawings.
FIG. 1 is a block diagram of a stereoscopic display controller according to an embodiment of the present disclosure.
FIG. 2 is a sequence diagram describing an operation of the stereoscopic display controller 1.
FIG. 3 is a timing chart describing an operation of a control unit.

### DESCRIPTION OF EMBODIMENTS

A known image display device for providing stereoscopic vision that forms the basis of a stereoscopic display controller according to one or more embodiments of the present disclosure corrects distortion of an optical system.

A light-emitting device according to one or more embodiments of the present disclosure will now be described with reference to the accompanying drawings.

### Overview

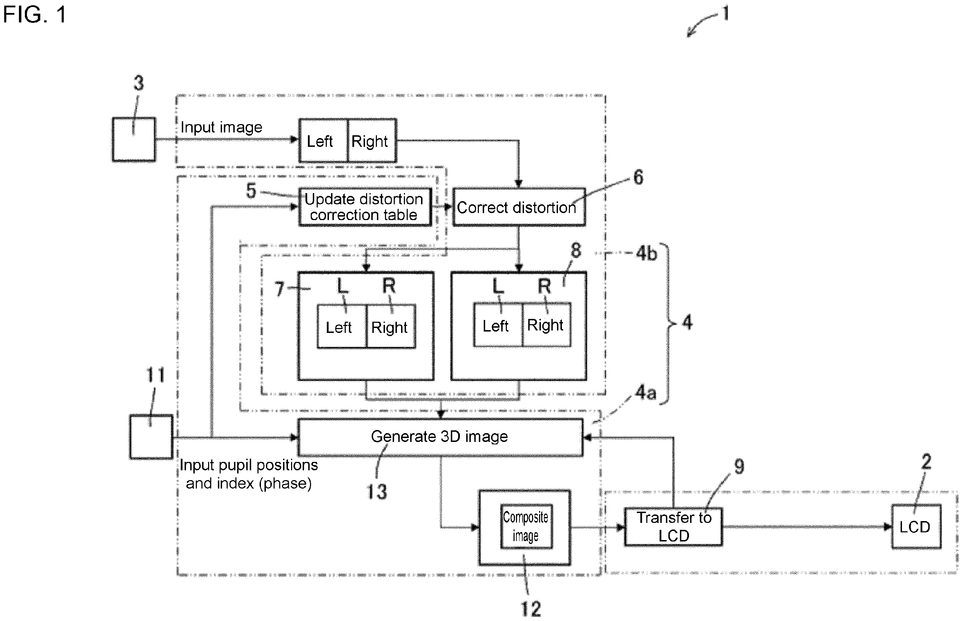

FIG. 1 is a block diagram of a stereoscopic display controller according to an embodiment of the present disclosure. A stereoscopic display controller 1 according to the present embodiment includes a display device 2, an input unit 3, and a control unit 4. The display device 2 displays a parallax image. The input unit 3 receives an input of a viewpoint position of a user. The control unit 4 performs a composition process of merging a left image and a right image into a parallax image. The composition process includes a first composition process and a second composition process. The control unit 4 outputs the parallax image to the display device 2. The control unit 4 performs the first composition process based on frame intervals of the parallax image. The control unit 4 performs the second composition process in response to an input of a viewpoint position into the input unit 2.

The control unit 4 may perform the first composition process once and the second composition process at least once to display one frame. The control unit 4 may perform the second composition process multiple times to display one frame.

The control unit 4 may include a composition table 5 for merging a left image and a right image into a composite image. The control unit 4 may merge the left image and the right image by referring to the composition table 5 to generate a parallax image of the left image and the right image.

In response to an input of a viewpoint position, the control unit 4 may update the composition table 5 based on the viewpoint position. The control unit 4 may include a distortion corrector 6 that performs a correction process of correcting distortion in the left image and the right image.

The control unit 4 may include a first control unit 4a and a second control unit 4b. The first control unit 4a may perform the composition process. The second control unit 4b may perform the correction process.

The second control unit 4b may include a correction table 6 for correcting distortion in the left image and the right image. The second control unit 4b may perform the correction process by referring to the correction table 6.

In response to an input of a viewpoint position, the control unit 4 may update the correction table 6 based on the viewpoint position.

The viewpoint position may be input at intervals shorter than the frame intervals. The control unit 4 may calculate a prediction value of a viewpoint position based on the change in the viewpoint position per unit time and perform the second composition process based on the calculated prediction value of the viewpoint position.

The display device 2 may include, for example, a liquid crystal panel, a light-blocking barrier, and a planar light source. The light-blocking barrier is placed nearer a viewer from the liquid crystal panel. The planar light source is behind the liquid crystal panel. The light-blocking barrier may be a TN liquid crystal panel.

The liquid crystal panel may include a light-incident glass substrate, a light-emission glass substrate, a liquid crystal layer between these substrates, a light-incident polarizing plate attached to the light-incident glass substrate, and a light-emission polarizing plate attached to the light-emission glass substrate. This liquid crystal panel is driven by, for example, a matrix drive system and displays an image in response to a voltage applied to transparent pixel electrodes (not illustrated) based on an image signal. A display control unit 9 can switch between two buffers 7 and 8 in every other vertical line by processing a video signal provided to the liquid crystal panel. The liquid crystal panel receives a right-eye image R and a left-eye image L alternately from one of the buffer 7 or the buffer 8 and displays the right-eye image R and the left-eye image L.

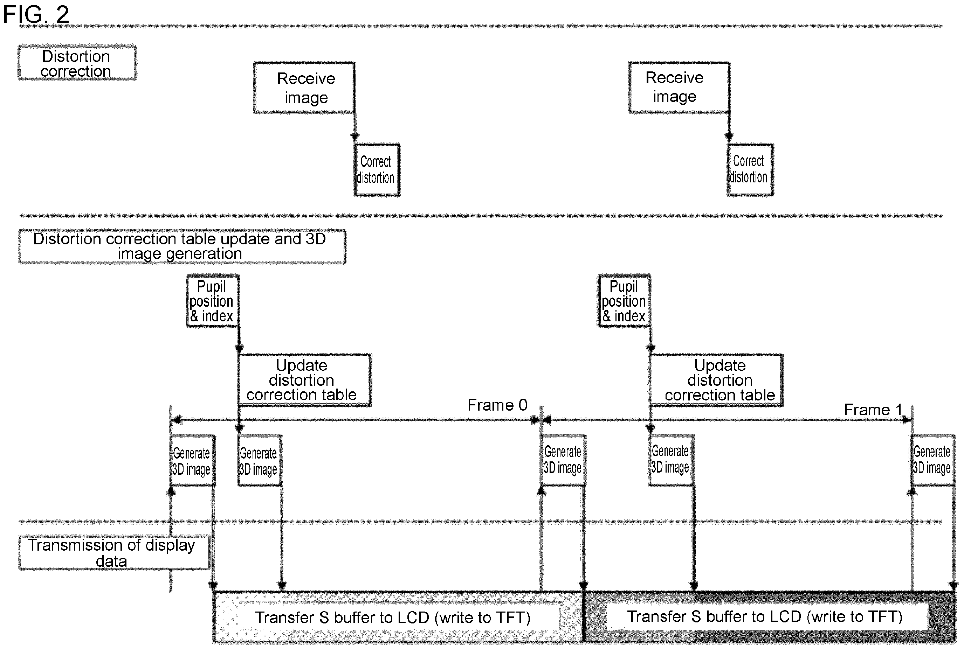

FIG. 2 is a sequence diagram describing an operation of the stereoscopic display controller 1. The control unit 4 may include one or more processors. The processors may include a general-purpose processor that reads a specific program and performs a specific function, and a processor dedicated to specific processing. The dedicated processor may include an application-specific integrated circuit (ASIC). The processors may include a programmable logic device (PLD). The PLD may include a field-programmable gate array (FPGA). The control unit 4 may be either a system on a chip (SoC) or a system in a package (SiP) in which one or more processors cooperate with other components. The control unit 4 may include a storage, and store various items of information or programs to operate each component of a three-dimensional (3D) display system 10 into the storage. The storage may be, for example, a semiconductor memory. The storage may function as a work memory for the control unit 4.

The control unit 4 causes multiple subpixels included in a left viewable portion in the display device 2 to display a left-eye image and causes multiple subpixels included in a left light-reducing portion to display a right-eye image. This allows a left eye to view a left-eye image easily and a left-eye image less easily. The control unit 4 causes multiple subpixels included in a right viewable portion to display a right-eye image and causes multiple subpixels included in a right light-reducing portion to display a right-eye image. This allows a right eye to view a right-eye image easily and a left-eye image less easily. The images displayed in the above manner can be viewed as a 3D image with the eyes of the user.

A detector 11 detects images of eyes in a captured image and detects, based on the images of the eyes in an image space, the positions of the eyes in a real space. The detector 11 transmits position data including the positions of the eyes in the real space to the stereoscopic display controller 1. Time is taken to detect eye positions with the detector 11, transmit position data from the detector 11 to the stereoscopic display controller 1, and change and reflect a display image based on the received position data. The display time at which an image based on the eye positions in a face is displayed has a time lag from the imaging time at which the image of the face is captured with the detector 11. The time lag includes a detection period, a transmission period, and a reflection period. The time lag depends on, for example, the performance of the detector 11, and the communication speeds of the detector 11 and the stereoscopic display controller. When the eyes of the user move at a speed faster than the speed obtained by dividing, by the time lag, the unit length for control to change the display image with the user's eye movement, the user views an image that does not correspond to the eye positions of the user. For example, with the unit length for control being 62.4 millimeters (mm) and the time lag being 65 milliseconds (ms), a user with the eyes moving at 0.24 mm/ms (24 centimeters per second or cm/s) or faster may feel discomfort with the 3D image.

To reduce the likelihood of such low viewability of a 3D image, the control unit 4 performs the processing described below. In the example described below, eyes may refer to a left eye and a right eye.

### Position Data Storing Process

The control unit 4 stores, into a memory, position data indicating the positions (measured positions) of eyes input through the input unit 3 and the order in which the position data is obtained. The memory sequentially stores measured eye positions based on captured images captured at predetermined imaging intervals. The memory may also store the order of the measured positions of the eyes. The predetermined imaging interval is a time interval between one captured image and the time at which the captured image is captured. The time interval may be set as appropriate for the performance and the design of the detector 11. Filtering Process

The control unit 4 may filter position data stored in the memory using, for example, a low-pass filter. The control unit 4 may filter position data with a large change in the eye positions per unit time. The control unit 4 may extract, by filtering, effective position data from position data with low accuracy of eye-position detection. The control unit 4 may use filtering to increase the accuracy of a prediction function being calculated. The control unit 4 may filter position data to simply extract position data with a small change with respect to time, or more specifically, position data with a frequency indicating a positional change lower than a predetermined value. The predetermined value is a maximum frequency indicating a positional change to achieve intended accuracy determined by, for example, an experiment.

### Prediction Process

The control unit 4 outputs future positions as predicted positions using multiple sets of position data stored in the memory. Being future herein refers to being future with respect to multiple sets of position data stored in the memory. The control unit 4 may use multiple sets of position data filtered with a low-pass filter. The control unit 4 may output predicted positions using multiple sets of recent position information. The control unit 4 may calculate a prediction function based on, for example, a reflection period taken to display an image and multiple sets of position data with a recent storing time selected from the sets of position data stored in the memory. The control unit 4 may determine the storing time based on the imaging time. The control unit 4 may calculate the prediction function based on measured eye positions, the obtaining time at which position data is obtained by the obtainer 3, and a predetermined reflection period estimated by, for example, an experiment.

The prediction function may be a function obtained by fitting multiple pairs of measured positions and imaging timings for the measurement. The prediction function may use an imaging time as the imaging timing. The prediction function is used to output predicted positions at the time obtained by adding the reflection period to the current time. More specifically, the control unit 4 uses the time obtained by subtracting the reflection period from the obtaining time as the time at which the eyes are at the measured positions to calculate, based on the measured positions of the eyes and the time at which the eyes are at the measured positions, the prediction function indicating the relationship between the eye positions at a time later than the current time and the eye positions at the current time. The prediction function may be a function obtained by fitting multiple measured positions in the order of the imaging rate. The prediction function may determine the correspondence with the current time based on the reflection period.

### Prediction Process

The control unit 4 outputs, at predetermined output intervals, predicted eye positions at the time corresponding to the time obtained by adding a predetermined period to the current time with the prediction function. The predetermined period is determined based on a display processing period estimated to be taken from when the control unit 4 starts display control to when an image is displayed on the display device 2. The predetermined output intervals may be shorter than the predetermined imaging intervals.

The control unit 4 starts controlling each subpixel corresponding to the viewable portion determined based on the most recently output predicted positions to display an image at display intervals at which the display device 2 is determined to update the image at a predetermined frequency. After the display processing time has elapsed from when the control unit 4 starts control to display each image, an image based on the predicted positions is displayed and updated.

The detector 11 may include, for example, a camera that captures images at 20 frames per second (fps). The camera captures images at imaging intervals of 50 ms. The control unit 4 may output captured images at output intervals equal to or different from the imaging intervals. The output intervals may be shorter than the imaging intervals. The output intervals may be 20 ms. In this case, the control unit 4 outputs information about predicted positions once every 20 ms, or in other words, 50 samples per second (sps). The control unit 4 can display images based on predicted eye positions output at intervals shorter than the imaging intervals. The display device 2 can thus provide, to the user, a 3D image responsive to smaller changes in eye positions.

The output intervals may be shorter than the display intervals for updating images to be displayed on the display device 2. When, for example, the control unit 4 causes the display device 2 to update an image at 60 Hertz (Hz), or in other words, the display interval is about 16.7 ms, the output interval may be 2 ms. In this case, the control unit 4 outputs predicted positions once every 2 ms, or in other words, 500 sps. The control unit 4 can cause an image to be displayed based on the positions of left and right eyes at the time closer to the display time than to the last time an image was displayed. Thus, the display device 2 can further reduce the likelihood of low viewability of a 3D image for the user caused by changes in eye positions. Evaluation Process

The control unit 4 may evaluate the prediction function and modify the prediction function based on the evaluation. More specifically, the control unit 4 may compare predicted eye positions output based on the prediction function with measured eye positions detected from a captured image and corresponding to the predicted eye positions. The control unit 4 may determine the correspondence between the predicted positions and the measured positions based on the recorded imaging time. The control unit 4 may determine the correspondence between the predicted positions and the measured positions based on the imaging intervals. The control unit 4 may modify the prediction function based on the comparison results. In subsequent prediction processes, the control unit 4 may output eye positions using the modified prediction function and cause the display device 2 to display an image based on eye positions predicted with the modified prediction function.

FIG. 2 is a sequence diagram describing the operation of the stereoscopic display controller 1. The detector 11 first obtains one image captured by a camera. After obtaining the captured image, the detector 11 detects eye positions based on the captured image. After detecting the eye positions, the detector 11 transmits position data indicating the eye positions to the display device 2. After transmitting the position data, the detector 11 determines whether an end instruction is input. Upon determining that an end instruction is input, the detector 11 ends the process. Upon determining that an end instruction has yet to be input, the detector 11 repeats the detection operation.

Subsequently, the control unit 4 for the display device 1 determines whether position data has been received by the obtainer 3. Upon determining that position data has yet to be received, the control unit 4 enters a standby state. Upon determining that position data has been received, the control unit 4 can perform the operation described below to store the position data into the memory.
(1) An image resulting from warping is divided into frames to be stored alternately into the two buffers 7 and 8. Warping in the present embodiment includes sampling pixels in a digital image, calculating a new position for each pixel, and then connecting the mapped digital image to the subpixels at new positions, as well as invoked resampling. Mapping may also include changing other features of subpixels such as their luminance or color. Pixel luminance mapping is also referred to as shading. Pixels are to be interpolated during resampling. Interpolation may be performed using nearest neighbor calculation, linear calculation, or nonlinear calculation based on known algorithms. To change white levels (contrast), black levels (luminance), or other image parameters in response to spatial positions and content in the digital image during interpolation, mapping may include spatial change filters.
(2) After storing a distortion-corrected image into the buffer 7 or the buffer 8, the control unit 4 permits reading from one of the buffer 7 or the buffer 8, prohibits writing into the other buffer, and stores the next distortion-corrected image.
(3) In the control unit 4, a 3D image generator generates a buffered image of the image permitted to be read.
(4) The control unit 4 performs the image composition process upon an input of an index and upon notification to switch buffers.
(5) When transfer ends, the control unit 4 notifies the distortion corrector 6 of the switching of the buffers 7 and 8.
(6) A single buffer can be rewritten at buffer switching in a vertical blanking (V-blank) period. The V-blank period may extend to about 2 ms.
(7) In the detector 11, a pupil position detector operates at 100 fps (asynchronous with 3D composition) and thus updates detection results twice at most in processing one frame.
(8) A 3D image generator 13 performs a composition process using two types of image composing hardware based on the detection results of pupil positions. Information about the pupil positions and information about the index (phase) are transmitted at the same time from the detector 11 to the 3D image generator 13. Upon every transmission of the information, the distortion corrector 6 updates the distortion correction table 5 for a left image or a right image, performs a 3D image composition process, and outputs a composite image from a composite-image output unit 12 to the display device 2. The processing then starts for image data of the next frame. As instructed by the second control unit 4b to perform the 3D image composition process (at a time preceding by the period taken by the 3D image generation processor 13 to perform the 3D image composition process), the 3D image generator 13 performs the 3D image composition process using the image data of the next frame.
(9) Although two frames of an image can occur temporarily during the image composition process, such two frames do not affect the display when the processing ends at the frame end. The control unit 4 causes the 3D image generation processor 13 to start the image composition process at a time preceding the time when the control unit 4 completes transmitting image data to the display device 2 by the period taken to perform the 3D image composition process.

The control unit 4 filters position data stored in the memory. The control unit 4 generates a prediction function based on the filtered position data. The control unit 4 again determines whether position data has been received by the obtainer 3. Upon determining that position data has yet to be received, the control unit 4 remains in the standby state. Upon determining that position data has been received, the control unit 4 causes the memory to store the position data.

The control unit 4 filters position data stored in the memory.

The control unit 4 modifies, in a display process (described in detail later), the prediction function using, among measured eye positions indicated by the filtered position data, measured eye positions indicated by the position data indicating the positions of the eyes captured at the display time at which the image is displayed. The control unit 4 determines whether an end instruction is input for a prediction-function-generation process. Upon determining that an end instruction is input for the prediction-function-generation process, the control unit 4 ends the prediction function-generation process. Upon determining that an end instruction has yet to be input for the prediction-function-generation process, the control unit 4 returns to the standby state. In the prediction-function-generation process described above, the control unit 4 outputs predicted positions at the output intervals based on the most recently predicted or modified prediction function.

The control unit 4 changes the display image based on the most recently output predicted positions and causes the display device 2 to display the image after the change at the display intervals.

The control unit 4 determines whether an end instruction is input for the image display process. Upon determining that an end instruction is input for the image display process, the control unit 4 ends the image display process. The display device 2 in the present embodiment outputs predicted eye positions at a future display time later than the current time based on position data stored in the memory and causes each subpixel P in the display panel to display a parallax image based on the predicted eye positions. The display device 2 can thus display an image based on eye positions at a closer time point to the display time than the structure that forms the basis of the present disclosure in which control to display an image is started upon obtaining of eye positions detected based on a captured image and based on the positions. Thus, the display device 2 can reduce the likelihood of low viewability of a 3D image for the user caused by changes in eye positions.

The control unit 4 in the present embodiment calculates a prediction function indicating the relationship between a future display time and eye positions based on position data stored in the memory and outputs predicted eye positions based on the prediction function. The control unit 4 can output predicted eye positions independently of the imaging time with a camera. The control unit 4 uses measured positions of a feature in an image captured with a camera to predict positions at which the feature point is to be detected in the future.

The control unit 4 in the present embodiment may output predicted eye positions based on a prediction function at the output intervals different from the imaging intervals. The control unit 4 can output predicted eye positions at the output intervals independent of the imaging intervals at which a camera captures images.

The control unit 4 in the present embodiment may output predicted eye positions based on a prediction function at the output intervals shorter than the imaging intervals. The display device 2 may provide 3D images responsive to eye positions that can change at intervals shorter than the imaging intervals.

The control unit 4 in the present embodiment modifies a prediction function based on comparison between predicted positions and measured positions. The control unit 4 can output predicted eye positions appropriately based on the prediction function modified each time. The display device 2 can display an image based on appropriate predicted positions. The display device 2 can reduce the likelihood of low viewability of a 3D image for the user caused by changes in eye positions.

The detector 11 may fail to detect eye positions under, for example, ambient light conditions or with obstacles on an optical path between the user's eyes and a camera. The obtainer 3 may fail to obtain position data in response to the detector failing to detect eye positions. For the display device 2 in the present embodiment, the control unit 4 performs the processes described below to avoid a decrease in the accuracy of a prediction function for any failure of obtaining position data with the obtainer 3. With the control 8 maintaining the accuracy of a prediction function, the display device 2 can reduce the likelihood of low viewability of a 3D image for the user.

The distortion corrector 6 may or may not be synchronized with the display device 2. As described above, the control unit 4 includes the composition table 5 for merging a left image and a right image into a composite image and merges a left image and a right image by referring to the composition table 5 to generate a parallax image of the left image and the right image. In response to an input of a viewpoint position, the composition table 5 is updated based on the viewpoint position.

The control unit 4 may perform the first composition process once and the second composition process at least once to display one frame, or perform the second composition process multiple times to display one frame.

### Prediction Process

In response to the obtainer 3 failing to obtain position data, the control unit 4 may output predicted positions at the current time using multiple sets of position data stored in the memory. The control unit 4 may calculate a prediction function for predicting eye positions at the current time using multiple sets of position data stored in the memory. The prediction function for predicting eye positions at the current time may be referred to as a first prediction function. The control unit 4 may output predicted positions at the current time based on the first prediction function.

To calculate the first prediction function, the control unit 4 may use multiple sets of position data filtered with a low-pass filter. The control unit 4 may output predicted positions using multiple sets of recent position information. The control unit 4 may calculate the first prediction function based on, for example, the reflection period taken to display an image and multiple sets of position data with a recent storing time selected from the set of position data stored in the memory. The control unit 4 may determine the storing time based on at least one of the imaging time, the storing order, or the serial number. In one example, the memory may simply store position information used to calculate the first prediction function. The control unit 4 may calculate the first prediction function based on all sets of position information stored in the memory. The control unit 4 may calculate the first prediction function based on measured eye positions, the obtaining time at which position data is obtained by the obtainer 3, and the predetermined reflection period estimated by, for example, an experiment.

In response to the obtainer 3 obtaining position data, the control unit 4 may compare the position data with position data with the most recent storing time selected from multiple sets of position data stored in the memory. The control unit 4 may determine that the obtainer 3 has failed to obtain position data when the two sets of position data indicate the same value. In other words, the control unit 4 may determine that the obtainer 3 has failed to obtain position data when the obtainer 3 has successively obtained sets of position data indicating the same value. The sets of position data indicating the same value herein may be two sets of position data with completely matching three coordinate values in a 3D space. The sets of position data indicating the same value may be two sets of position data with the sum of the differences between three coordinate values of one set and those of the other in a 3D space being less than a threshold value, or two sets of position data with the maximum difference between three coordinate values of one set and those of the other in a 3D space being less than a threshold value. The thresholds may be predetermined by, for example, an experiment.

In response to the obtainer 3 successively obtaining two sets of position data indicating the same value, the control unit 4 may discard the second one of the two sets of position data obtained successively, or more specifically, the set of position data with a more recent obtaining time than the other set. The control unit 4 may output predicted positions at the current time based on multiple sets of position data including the set of position data with a less recent obtaining time than the other of the two sets of position data obtained successively. Prediction Process

The control unit 4 outputs predicted eye positions at a future time using multiple sets of position data including predicted positions at the current time. The future time herein refers to a time later than the current time. The control unit 4 may calculate a prediction function for predicting eye positions at the current time using multiple sets of position data stored in the memory. A prediction function for predicting eye positions at a future time may be referred to as a second prediction function. The control unit 4 may output predicted positions at a future time based on the second prediction function.

To calculate the second prediction function, the control unit 4 may use multiple sets of position data filtered with a low-pass filter. The control unit 4 may output predicted positions using multiple sets of recent position information. The control unit 4 may calculate the second prediction function based on, for example, the reflection period taken to display an image and multiple sets of position data with recent storing time selected from the set of position data stored in the memory. The control unit 4 may determine the storing time based on at least one of the imaging time, the storing order, or the serial number. The control unit 4 may calculate the second prediction function based on measured eye positions, the obtaining time at which position data is obtained by the obtainer 3, and the predetermined reflection period estimated by, for example, an experiment. The second prediction function may be the same function as the first prediction function, or a different function.

### Image Displaying Process

The control unit 4 starts controlling each subpixel P corresponding to a viewable portion 5a determined based on the most recently output predicted positions to display an image at display intervals at which the display device 2 is determined to update the image at a predetermined frequency. After the display processing time has elapsed from when the control unit 4 starts control to display each image, an image based on the predicted positions is displayed on the display device 2 and updated.

### Evaluation Process

The control unit 4 may evaluate the second prediction function and modify the second prediction function based on the evaluation. The control unit 4 may compare predicted eye positions output based on the second prediction function with measured eye positions detected from a captured image and corresponding to the predicted positions. The control unit 4 may determine the correspondence between the predicted positions and the measured positions based on the recorded imaging time. The control unit 4 may determine the correspondence between the predicted positions and the measured positions based on the imaging intervals. The control unit 4 may modify the second prediction function based on the results of the comparison. The control unit 4 may output eye positions using the modified second prediction function in subsequent prediction processes and cause the display device 2 to display an image based on the eye positions predicted with the modified second prediction function.

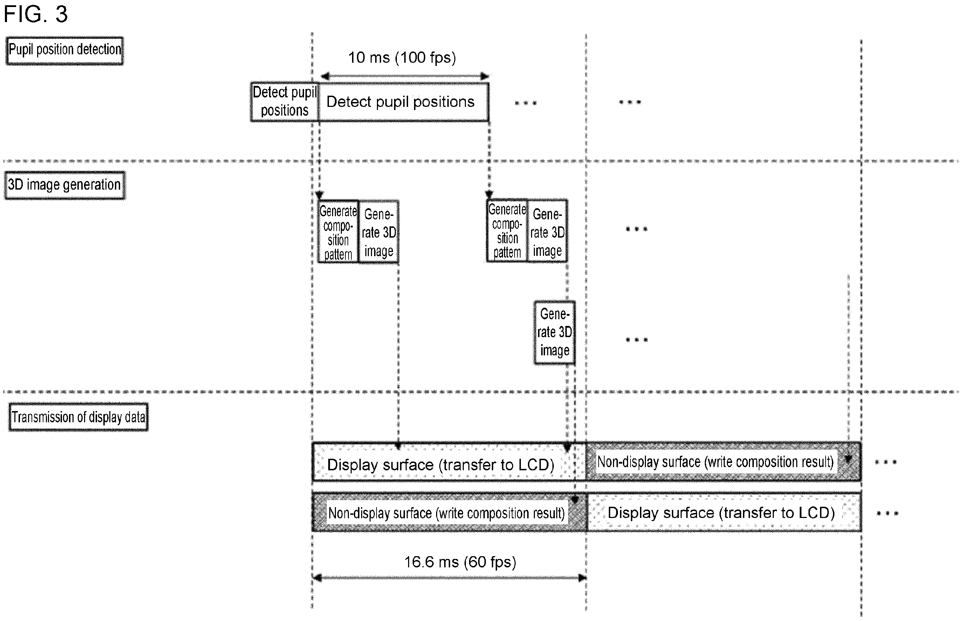

With reference to the timing chart in FIG. 3, another example of the prediction function-generation process and the image display process performed by the display device 2 will now be described. The control unit 4 may operate at shorter intervals than the imaging intervals at which the camera in the detector 11 captures images. The control unit 4 determines whether position data has been received by the input unit 3. Upon determining that no position data has been received, the control unit 4 calculates the first prediction function using multiple sets of position data stored in the memory and outputs predicted positions at the current time based on the first prediction function. The control unit 4 calculates the second prediction function based on multiple sets of position data including the predicted positions at the current time and outputs predicted positions at a future time based on the second prediction function.

The control unit 4 changes a display image based on the predicted positions at the future time and causes the display device 2 to display the image after the change at the display intervals. The control unit 4 determines whether an end instruction is input for the image display process. Upon determining that an end instruction is input for the image display process, the control unit 4 ends the image display process. Upon determining that an end instruction has yet to be input, the control unit 4 returns to the standby state. Upon determining that the position data has been received, the control unit 4 determines whether sets of position data indicating the same value have been obtained successively. The control unit 4 compares the received position data with the position data having the most recent imaging time selected from the multiple sets of position data stored in the memory. Upon determining that sets of position data indicating the same value have been obtained successively, the control unit 4 discards the second one of the sets of position data obtained successively. Upon determining that no sets of position data indicating the same value have been obtained successively, the control unit 4 calculates, in response to the input unit 3 failing to obtain position data, calculates predicted eye positions at the current time based on multiple sets of position data stored in the memory and outputs the predicted positions as the position data at the current time. The display device 2 can thus accurately predict eye positions at the current time although the detector 11 fails to detect eye positions.

The control unit 4 outputs predicted eye positions at a future time based on multiple sets of position data including predicted positions at the current time and causes each subpixel in the display device 2 to display a parallax image based on the predicted positions. The display device 2 can thus accurately predict eye positions at the future time although the detector 11 fails to detect the eye positions. The display device 2 can display an image based on the predicted eye positions at the future time and can thus reduce the likelihood of low viewability of a 3D image for the user.

In the present embodiment, the control unit 4 predicts, based on the captured image obtained with the camera in the detector 11 and the imaging time of the captured image, the eye positions at a time later than the imaging time. Thus, the display device 2 may operate with the control unit 4 and the detector 11 operating asynchronously with each other. In other words, the display device 2 may operate with the control unit 4 and the detector 11 being systems separate from each other. The display device 2 can thus provide the detector 11 and the control unit 4 with clock signals having frequencies appropriate for their respective operations. This allows the detector 11 and the control unit 4 to operate normally at high speed. The control unit 4 and the detector 11 may operate asynchronously with each other based on the same clock signal or on different clock signals. One of the control unit 4 or the detector 11 may operate synchronously with a first clock signal, and the other may operate synchronously with a second clock signal obtained by dividing the frequency of the first clock signal.

Although the above embodiments are described as typical examples, various variations and substitutions to the embodiments are apparent to those skilled in the art without departing from the spirit and scope of the present disclosure. Thus, the above embodiments should not be construed to be restrictive, but may be variously varied or altered within the scope of the present disclosure. For example, multiple structural blocks described in the above embodiments or examples may be combined into a structural block, or each structural block may be divided.

The display device 2 controlled by a stereoscopic display controller is not limited to a transmissive display panel, but may be another display panel such as a self-luminous display panel. The transmissive display panel may be a microelectromechanical systems (MEMS) shutter display panel, in addition to a liquid crystal panel. The self-luminous display panel may be an organic electroluminescent (EL) display panel or an inorganic EL display panel. When the display device 2 is a self-luminous display panel, the illuminator 4 is eliminated. When the display device 2 is a self-luminous display panel, the parallax barrier 6 is located adjacent to a portion of the display device 2 from which image light is emitted.

In one or more embodiments of the present disclosure, the movable body includes a vehicle, a vessel, and an aircraft. In one or more embodiments of the present disclosure, the vehicle includes, but is not limited to, an automobile and an industrial vehicle, and may also include a railroad vehicle, a community vehicle, and a fixed-wing aircraft traveling on a runway. The automobile includes, but is not limited to, a passenger vehicle, a truck, a bus, a motorcycle, and a trolley bus, and may also include another vehicle traveling on a road. The industrial vehicle includes an industrial vehicle for agriculture and an industrial vehicle for construction. The industrial vehicle includes, but is not limited to, a forklift and a golf cart. The industrial vehicle for agriculture includes, but is not limited to, a tractor, a cultivator, a transplanter, a binder, a combine, and a lawn mower. The industrial vehicle for construction includes, but is not limited to, a bulldozer, a scraper, a power shovel, a crane vehicle, a dump truck, and a road roller. The vehicle includes a human-powered vehicle. The classification of the vehicle is not limited to the above. For example, the automobile may include an industrial vehicle traveling on a road, and one type of vehicle may fall within multiple classes. In one or more embodiments of the present disclosure, the vessel includes a jet ski, a boat, and a tanker. In one or more embodiments of the present disclosure, the aircraft includes a fixed-wing aircraft and a rotary-wing aircraft.

The present disclosure may be implemented in the following forms.

In one or more embodiments of the present disclosure, a stereoscopic display controller includes a display device that displays a parallax image, an input unit that receives an input of a viewpoint position of a user, and a control unit that performs a composition process of merging a left image and a right image into a parallax image. The composition process includes a first composition process and a second composition process. The control unit outputs the parallax image to the display device, performs the first composition process based on frame intervals of the parallax image, and performs the second composition process in response to an input of the viewpoint position into the input unit.

In one or more embodiments of the present disclosure, the stereoscopic display controller can improve the quality of stereoscopic images provided to users.

Although embodiments of the present disclosure have been described in detail, the present disclosure is not limited to the embodiments described above, and may be changed or varied in various manners without departing from the spirit and scope of the present disclosure. The components described in the above embodiments may be entirely or partially combined as appropriate unless any contradiction arises.

### REFERENCE SIGNS

- 1: stereoscopic display controller
- 2: display device
- 4: control unit
- 4a: first control unit
- 4b: second control unit
- 5: composition table
- 6: distortion corrector
- 9: display control unit
- 7, 8: buffer
- 11: detector
- 12: composite-image output unit
- 13: 3D image generator
- R: right-eye image
- L: left-eye image

## Claims

1. A stereoscopic display controller, comprising:
a display device configured to display a parallax image;
an input unit configured to receive an input of a viewpoint position of a user; and
a control unit configured to perform a composition process of merging a left image and a right image into a parallax image, the composition process including a first composition process and a second composition process,
wherein the control unit outputs the parallax image to the display device,
performs the first composition process based on frame intervals of the parallax image, and
performs the second composition process in response to an input of the viewpoint position into the input unit.

2. The stereoscopic display controller according to claim 1, wherein
the control unit performs the first composition process once and the second composition process at least once to display one frame.

3. The stereoscopic display controller according to claim 1, wherein
the control unit performs the second composition process a plurality of times to display one frame.

4. The stereoscopic display controller according to any one of claims 1 to 3, wherein the control unit includes a composition table to merge the left image and the right image, and merges the left image and the right image by referring to the composition table to generate a parallax image.

5. The stereoscopic display controller according to claim 3, wherein
the control unit updates, in response to an input of the viewpoint position, the composition table based on the viewpoint position.

6. The stereoscopic display controller according to any one of claims 1 to 5, wherein
the control unit performs a correction process of correcting distortion in the left image and the right image.

7. The stereoscopic display controller according to claim 4, wherein
the control unit includes a first control unit and a second control unit,
the first control unit performs the composition process, and
the second control unit performs the correction process.

8. The stereoscopic display controller according to claim 7, wherein
the second control unit includes a correction table to correct distortion in the left image and the right image, and performs the correction process by referring to the correction table.

9. The stereoscopic display controller according to claim 8, wherein
the control unit updates, in response to an input of the viewpoint position, the correction table based on the viewpoint position.

10. The stereoscopic display controller according to any one of claims 1 to 9, wherein the viewpoint position is input at intervals shorter than the frame intervals.

11. The stereoscopic display controller according to any one of claims 1 to 10, wherein
the control unit calculates a prediction value of the viewpoint position based on a change in the viewpoint position per unit time and performs the second composition process based on the calculated prediction value of the viewpoint position.
